# FASCICULE DE BREVET EUROPEEN

(11) **EP 1 721 795 B1**
(45) Date de publication et mention de la délivrance du brevet: **05.03.2008**
(21) Numéro de dépôt: 06300446.9
(22) Date de dépôt: 09.05.2006
(51) Int. Cl.: B60S 1/04, B62D 65/16

(54) **Dispositif et procédé de fixation d'un mécanisme d'essuie-vitre sur une partie de caisse de véhicule, et véhicule automobile équipé d'un tel dispositif**
Vorrichtung sowie Verfahren zur Befestigung eines Scheibenwischermechanismus auf einem Fahrzeugkarosserieteil, und Kraftfahrzeug mit einer solchen Vorrichtung
Device and method for fixing a wiper mechanism on a vehicle body and automotive vehicle with such a device

(30) Priorité: 13.05.2005 FR 0504866
(43) Date de publication de la demande: 15.11.2006
(73) Titulaire: PEUGEOT CITROËN AUTOMOBILES S.A., 78140 Velizy Villacoublay (FR)
(72) Inventeur: Jeuffe, Gérard, 78810, FEUCHEROLLES (FR)

(56) Documents cités:
- FR-A- 2 839 691
- FR-A- 2 842 154
- US-A1- 2003 042 750

## Description

L'invention concerne un dispositif de positionnement et de fixation d'un mécanisme d'essuie-vitre sur une partie de caisse de véhicule automobile, comprenant au moins trois paires d'éléments de fixation, chacune comprenant un élément de fixation, solidaire du mécanisme d'essuie-vitre, et un deuxième élément de fixation solidaire de la partie de caisse, dans lequel les première et deuxième paires forment des liaisons pivot coaxiales offrant au mécanisme une liberté de rotation suivant un même axe, et la troisième paire forme une liaison à enclenchement élastique par rotation autour dudit axe.

On connaît, dans l'état de la technique, des mécanismes d'essuie-vitre montés au moyen d'un tel dispositif de fixation. Par exemple, certains de ces dispositifs de fixation fonctionnent par engagement et enclenchement de deux extrémités d'un axe de mécanisme dans deux paliers respectifs, chacun formant une pince solidaire de la structure du véhicule. Un dispositif selon le préambule de la revendication 1 est décrit par le document US 2003/042750 A1.

Ces dispositifs de fixation connus ont notamment pour inconvénient de rendre difficile le positionnement précis du mécanisme aux deux premiers points de fixation, en vue de la fixation du troisième point.

L'invention a pour but de remédier à cet inconvénient, et a pour objet, à cet effet, un dispositif du type ci-dessus dans lequel les première et deuxième paires sont conçues pour être assemblées par engagement axial du premier élément de fixation dans le deuxième élément de fixation successivement, et selon deux sens opposés.

Selon des caractéristiques optionnelles de l'invention, prises seules ou suivant toutes les combinaisons techniquement envisageables :
- le premier élément de fixation des deux paires formant pivot comprend un téton partiellement cylindrique, solidaire du mécanisme d'essuie-vitre à une extrémité libre d'un bras de ce dernier, tandis que le deuxième élément de fixation de ces deux paires comprend un trou complémentaire du téton respectif ménagé dans une plaquette de fixation respective solidaire de la partie de caisse, et conformé de façon à empêcher l'engagement ou le retrait du téton de façon radiale ;
- le téton d'une première des deux paires formant pivot présente un tronçon d'extrémité libre cylindrique, pouvant s'engager de façon ajustée dans le trou correspondant, et un tronçon intermédiaire de moindre section, de sorte qu'un débattement angulaire du téton par rapport à son axe est autorisé lorsque le tronçon intermédiaire est engagé dans le trou correspondant ;
- le téton de la deuxième des deux paires formant pivot comporte des moyens d'enclenchement élastique fonctionnant axialement, qui forment des moyens d'arrêt s'opposant au retrait dudit téton du trou correspondant ;
- les tétons sont adaptés pour que, lorsque le téton de la deuxième paire est dans la position de butée définie par lesdits moyens d'arrêt, le téton de la première paire est engagé dans le trou correspondant par son tronçon intermédiaire ;
- le deuxième élément de fixation de la paire formant liaison par enclenchement comprend un plot en forme d'ogive, pourvu d'un épaulement, et faisant saillie de la partie de caisse vers l'extérieur ; et
- le premier élément de fixation de la paire formant liaison par enclenchement comprend un réceptacle en matériau élastomère solidaire du mécanisme, ayant un logement complémentaire du plot, et un col déformable prévu pour coopérer avec l'épaulement de façon à bloquer le plot dans le logement.

L'invention vise également un procédé de montage d'un mécanisme d'essuie-vitre sur une partie de caisse d'un véhicule automobile, ledit mécanisme et ladite partie de caisse étant pourvus d'un dispositif de positionnement et de fixation tel que décrit précédemment.

Selon le procédé conforme à l'invention, on réalise les étapes successives suivantes :
- on assemble la première des paires formant pivot ;
- on assemble la deuxième des paires formant pivot ; et
- on assemble la paire formant liaison par enclenchement en faisant pivoter le mécanisme autour de l'axe de rotation défini par les pivots.

De préférence pour assembler les paires formant pivot .
- on engage le téton de la première paire dans le trou correspondant, et on poursuit l'engagement axial jusqu'à ce que le tronçon de moindre section soit engagé dans le trou ;
- on place le téton de la deuxième paire en regard du trou correspondant, et on l'y engage axialement jusqu'à enclenchement des moyens d'enclenchement élastique associés, de sorte que le téton de la première paire coopère de façon ajustée avec le trou correspondant au niveau du tronçon d'extrémité.

L'invention vise enfin un véhicule automobile équipé d'un dispositif de positionnement et de fixation d'un mécanisme d'essuie-vitre sur une partie de caisse, tel que décrit précédemment.

Un mode particulier de réalisation de l'invention va maintenant être décrit en référence aux dessins annexés, sur lesquels :
- la Figure 1 est une vue en perspective d'un mécanisme d'essuie-vitre et d'un dispositif conforme à l'invention, en configuration assemblée ;
- la Figure 2 est une vue en coupe schématique, dans le plan médian vertical 2-2, de la première paire d'éléments de fixation du dispositif de la Figure 1, en configuration assemblée ;
- la Figure 3 est une vue analogue, dans le plan 3-3, de la deuxième paire d'éléments de fixation ;
- la Figure 4 est une vue analogue, dans le plan 4-4, de la troisième paire d'éléments de fixation ;
- la Figure 5 est une vue analogue, à la Figure 1, dans une configuration correspondant à une première étape intermédiaire de montage du mécanisme d'essuie-vitre sur la caisse du véhicule ;
- les Figures 6 et 7 sont des vues analogues respectivement aux Figures 2 et 3, dans la configuration de la Figure 5 ;
- la Figure 8 est une vue analogue aux Figures 1 et 5, dans une configuration correspondant à une deuxième étape intermédiaire de montage du mécanisme ;
- les Figures 9 et 10 sont des vues en perspective, à plus grande échelle, d'un collier de serrage prévu pour condamner le verrouillage de la troisième paire d'éléments de fixation, respectivement en configuration pré-assemblée et en configuration serrée ; et
- les Figures 11 et 12 sont des vues en coupe schématique, dans le plan médian vertical 11-11, de la troisième paire d'éléments de fixation dans la configuration assemblée de la Figure 1, le collier de serrage étant respectivement en configuration pré-assemblée et en configuration serrée condamnant la fixation.

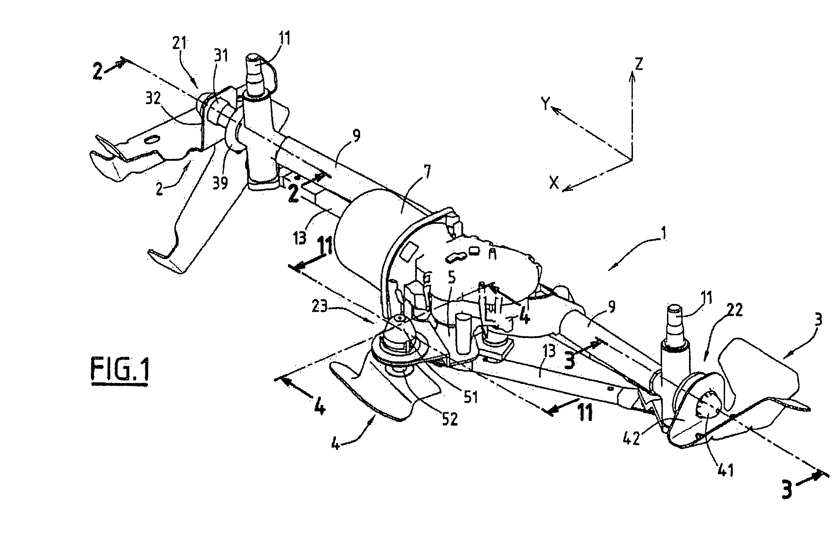

Sur la Figure 1, on a représenté un mécanisme 1 d'essuie-vitre pour véhicule automobile, et trois supports rigides 2, 3, 4 de fixation, solidaires d'une partie de caisse de véhicule automobile (non représentée). Ces supports sont, par exemple, réalisés en tôle et soudés sur la caisse.

Le mécanisme 1 comporte essentiellement .
- une platine de support 5 centrale,
- un moteur d'entraînement 7 monté sur la platine 5,
- une barre transversale (ou bras transversal) 9, s'étendant de part et d'autre de la platine 5,
- deux arbres 11 montés rotatifs chacun à une extrémité de la barre 9, et destinés à entraîner chacun un balai d'essuie-glace en rotation, et
- une tringlerie 13 prévue pour transmettre le mouvement d'entraînement du moteur 7 à chacun des arbres 11.

Pour la commodité de la description qui va suivre, on orientera le mécanisme 1 dans un repère X, Y, Z, associé au véhicule sur lequel le mécanisme est supposé monté. Dans ce repère, l'axe X représente l'axe longitudinal du véhicule orienté vers l'avant, l'axe Y représente l'axe transversal orienté de la gauche vers la droite. Les axes X, Y seront supposés horizontaux, et l'axe Z sera supposé vertical et orienté du bas vers le haut.

Le positionnement et la fixation du mécanisme 1 sur la caisse du véhicule sont réalisés au moyen de trois paires 21, 22, 23 d'éléments de fixation complémentaires.

On se réfère à présent plus particulièrement aux Figures 1 à 4.

La première paire 21 comprend d'une part un téton 31, à extrémité libre de forme sensiblement hémisphérique, qui fait saillie de la barre 9 à une extrémité de cette dernière (extrémité gauche), sensiblement dans le prolongement de la direction principale de la barre.

Le téton 31 comprend, du côté de l'extrémité libre, un premier tronçon cylindrique 31A, et un tronçon intermédiaire 31B cylindrique de moindre section.

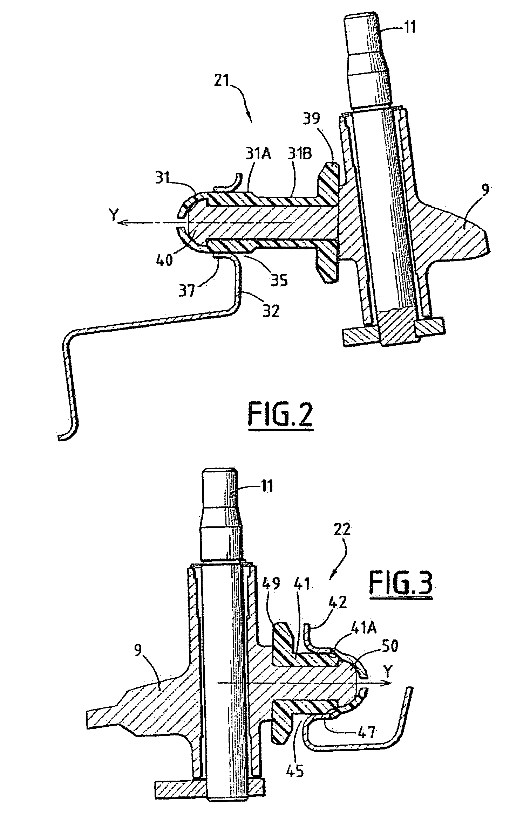

Comme cela est mieux vu sur la Figure 2, la première paire 21 comporte d'autre part un deuxième élément de fixation formé d'une plaquette 32 solidaire du support 2, cette plaquette étant dotée d'un trou circulaire 35, complémentaire du tronçon d'extrémité 31A. Ainsi, le tronçon 31A peut s'engager de façon ajustée dans le trou 35.

La plaquette 32 est formée également avec un rebord 37 s'étendant sur la périphérie du trou 35, de façon à constituer une partie d'appui plan pour le téton 31.

Lorsque le téton 31 est engagé dans le trou 35, comme représenté sur la Figure 1, le téton 31 s'étend suivant l'axe transversal Y, et les deux éléments de fixation 31, 32 définissent une liaison pivot, la plaquette 32 formant un palier d'appui du mécanisme 1 sur la caisse de véhicule. Cette liaison assure une liberté de rotation du mécanisme autour de l'axe Y, et autorise un coulissement suivant l'axe Y du téton par rapport à la plaquette 32.

On notera que le deuxième élément de la première paire 21 est pourvu d'une collerette 39, solidaire du téton 31 à la base de ce dernier, et prévu pour limiter l'engagement du téton dans le trou 35 suivant l'axe Y.

On voit sur la Figure 2 que le téton 31 et la collerette 39 sont par exemple formés d'une pièce emmanchée sur une saillie cylindrique 40 d'extrémité du bras 9. De préférence, cette pièce formant le téton 31 et la collerette 39 est un manchon élastomère, par exemple en caoutchouc. Ce manchon est prévu pour se déformer légèrement en compression lors de l'engagement du tronçon 31A dans le trou 35, et ainsi assurer une rétention par friction de l'extrémité correspondante du mécanisme, en engagement avec le support 2.

On se réfère à présent plus particulièrement aux Figures 1 et 3.

La deuxième paire 22 comprend d'une part un téton 41 analogue au téton 31, sensiblement de même axe et orienté de façon opposée, agencé à l'autre extrémité du bras transversal 9 (extrémité droite). Le téton 41 constitue le premier élément de fixation de la deuxième paire 22.

La deuxième paire 22, comprend d'autre part un deuxième élément de fixation, sous la forme d'une plaquette 42 solidaire du support 3, pourvue d'un trou circulaire 45 de réception du téton 41, complémentaire de ce dernier. Le trou circulaire 45 est sensiblement d'axe Y, de sorte que lorsque le téton 41 est engagé dans le trou circulaire 45, comme représenté sur la Figure 1, la deuxième paire d'éléments de fixation 22 définit une liaison pivot. La plaquette 42 forme un palier d'appui d'une extrémité du bras 9 sur la caisse du véhicule, avec un degré de liberté en rotation autour de l'axe transversal Y.

De façon analogue à ce qui a été décrit pour la première paire d'éléments de fixation 21, et comme représenté sur la Figure 3, la plaquette 42 est formée avec un rebord 47 s'étendant en périphérie du trou 45 de façon à constituer une surface d'appui périphérique pour le téton 41, plus importante que celle définie par l'épaisseur de la plaquette 42.

On notera que le premier élément de fixation de la deuxième paire 22 est, de façon analogue à ce qui a été décrit pour la première paire 21, pourvu d'une collerette 49 formée à la base du téton 41, afin de limiter l'engagement dans ce dernier dans le trou 45.

Le téton est formé d'une pièce avec la collerette 49, cette pièce étant un manchon emmanché sur une saillie 50 d'extrémité du mécanisme.

Le téton 41 est pourvu, entre son extrémité libre et la collerette 49, d'ergots 41A élastiquement déformables répartis sur une circonférence. Ces ergots définissent des moyens d'enclenchement élastique pouvant coopérer à engagement axial avec le bord 47 du trou 45. Les ergots 41A forment ainsi des moyens d'arrêt s'opposant au retrait du téton 41 du trou 45, après engagement mutuel.

Il découle de ce qui a été exposé précédemment que les liaisons définies par les première 21 et deuxième 22 paires d'éléments de fixation offrent au mécanisme 1 une liberté de rotation et une liberté de translation, limitée par les collerettes 39, 49, suivant l'axe commun Y des paliers dans chacun des deux sens.

La troisième paire d'éléments de fixation 23 comporte un premier élément 51 solidaire du mécanisme 1, et un deuxième élément 52 (Figure 2), solidaire du support 4.

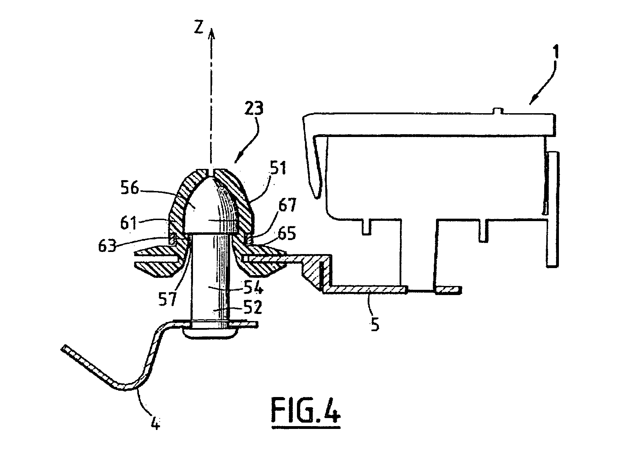

Comme cela peut être vu sur la Figure 4, le deuxième élément 52 est formé essentiellement d'une tige cylindrique 54, qui fait saillie verticalement vers le haut du support 4, et d'un plot en forme d'ogive à l'extrémité libre de la tige. Le plot 56 est pourvu d'un épaulement 57 au niveau de la jonction avec la tige 54.

Le premier élément de fixation 51 est essentiellement formé d'un réceptacle en matériau élastomère 61, solidaire de la platine 5, qui possède un logement complémentaire du plot ogival 56, et un col déformable 63 formé à l'entrée dudit logement. Ce col 63 est prévu pour coopérer avec l'épaulement 57 du plot, de façon à bloquer axialement ce dernier après engagement. Le col déformable 63 et l'épaulement 57 définissent des moyens complémentaires d'enclenchement élastique fonctionnant sensiblement selon l'axe Z.

Le réceptacle 61 est extérieurement pourvu d'une gorge périphérique 65, formée au niveau du col 63.

L'élément de fixation 51 est en outre pourvu d'un collier de serrage 67, qui peut être engagé dans la gorge 65 et serré pour condamner le verrouillage mutuel après enclenchement des deux éléments de fixation 51, 52.

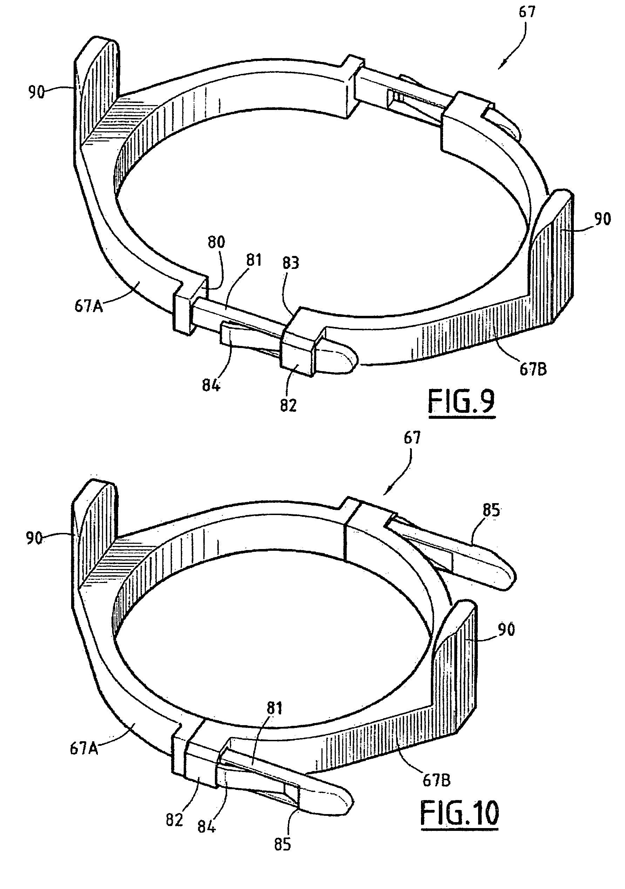

Le collier 67 et son fonctionnement seront décrits plus précisément ultérieurement en référence aux Figures 9 à 12.

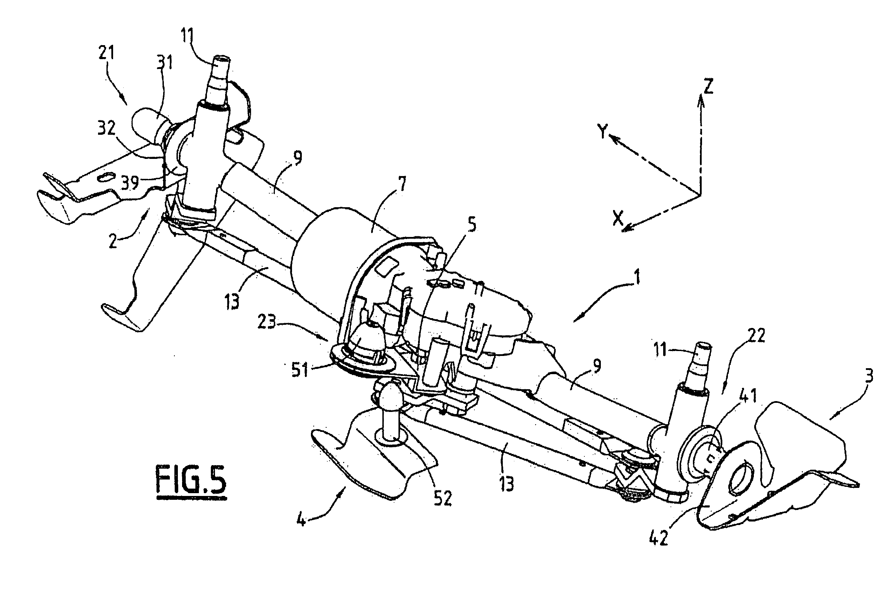

Les Figures 1 à 4 déjà décrites montrent le mécanisme 1 monté de façon complète sur la partie de caisse. En référence aux Figures 5 à 8, on va à présent décrire les principales étapes intermédiaires du procédé permettant de monter et de fixer le mécanisme d'essuie-vitre sur la partie de caisse.

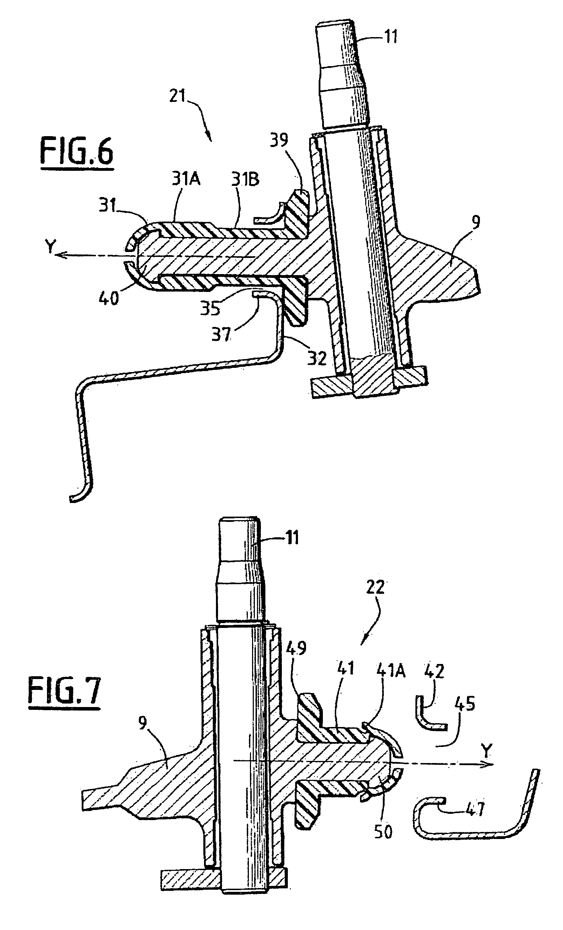

Une première étape du procédé de montage consiste à engager le téton 31 dans le trou 35, jusqu'à parvenir à l'engagement du tronçon 31B dans le trou, de sorte qu'il existe un jeu entre le téton 31 et le rebord 37 permettant un débattement du téton 31 par rapport à l'axe Y (voir Figure 6).

Le téton 41 est alors espacé du trou 45, et le débattement du mécanisme 1 par rapport au support 3, autorisé par le jeu entre le téton 31 et le trou respectif 35, permet de placer le téton 41 en regard du trou 45, de façon sensiblement coaxiale (voir Figure 7).

Au cours de cette première étape, les éléments de fixation 51, 52 de la troisième paire 23 restent dégagés l'un de l'autre, car décalés selon les axes Y et Z. La position du mécanisme obtenue au terme de cette première étape de montage est représentée sur la Figure 5.

Après engagement coaxial du téton 31 dans le trou 35 correspondant, le téton 41 est engagé coaxialement dans le trou 45 par un déplacement du mécanisme 1 en sens opposé, également selon l'axe Y. L'engagement axial du téton 41 est poursuivi jusqu'à enclenchement des ergots 41A sur le bord du trou 45.

Au terme de cet engagement et de l'enclenchement, comme illustré sur la Figure 3, le téton 31 engagé en premier lieu revient dans une position axiale telle que le tronçon 31A de plus grand diamètre s'étend au travers du trou 35 et fait contact sur le rebord 37 en engagement ajusté.

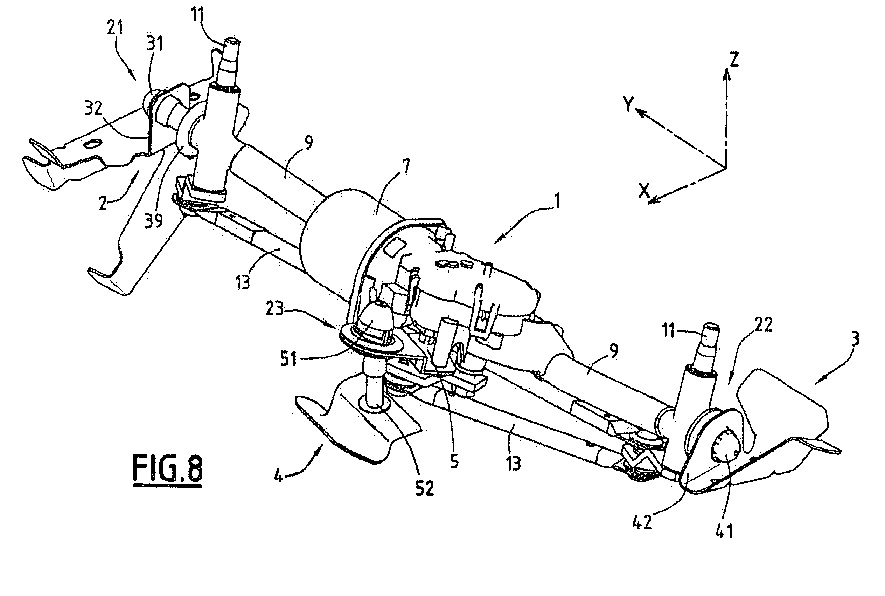

La Figure 8 illustre la position du mécanisme au terme de cette étape intermédiaire de montage.

Dans une étape ultérieure de montage, on assemble les deux éléments de fixation 51, 52 de la paire formant liaison par enclenchement 23, en faisant pivoter le mécanisme 1 autour de l'axe de rotation Y défini par les liaisons pivot 21, 22.

Une fois l'enclenchement réalisé, le collier de serrage 67 est mis en place dans la gorge 65 pour condamner le verrouillage, comme illustré sur la Figure 4. Le mécanisme est alors dans la configuration illustrée sur la Figure 1.

Comme représenté sur les Figures 9 et 10, le collier de serrage 67 comprend deux demi-colliers 67A et 67B semi-circulaires.

Le premier demi-collier 67A comprend à chacune de ses deux extrémités opposées une face butée 80, et une languette rectiligne 81 en saillie à partir de la face 80. Le deuxième demi-collier 67B présente à ses deux extrémités opposées, et de façon correspondante, deux oreilles 82. Chaque oreille 82 est pourvue d'une fenêtre dans laquelle est engagée la languette 81 respective, et d'une face de butée 83 correspondant à la face 80.

La languette 81 s'étend selon une direction tangente au cercle défini par le collier. Elle est dotée d'une lance élastique 84 de verrouillage formant organe de verrouillage de l'oreille 82 dans la position relative de serrage des deux demi-colliers 67A et 67B. Du côté de son extrémité libre, la languette 81 est dotée d'un décrochement 85 formant une butée d'arrêt axial pour l'oreille 82 dans le sens de la séparation des deux demi-colliers 67A, 67B.

Dans une région médiane, chaque demi-collier 67A, 67B est doté d'un bouton de manoeuvre 90, formé en saillie dans une direction orthogonale au plan général du collier circulaire.

Dans la position pré-montée du collier 67, telle que représentée sur la Figure 9, les deux demi-colliers 67A, 67B sont maintenus solidaires dans une position d'attente, par engagement des oreilles 82 dans les crans formés entre les décrochements 85 et les lances 84.

Dans la configuration de serrage représentée sur la Figure 10, les oreilles 82 du deuxième demi-collier 67B sont bloquées sans jeu entre les extrémités libres des lances 84 et les faces 80 sur lesquelles viennent en appui les faces 83. Les lances 84 sont conformées de telle sorte que le collier ne peut être ramené à sa configuration desserrée que moyennant la destruction au moins partielle du collier. Le serrage du collier 67 n'est donc pas réversible.

De préférence, le collier est réalisé en matière plastique.

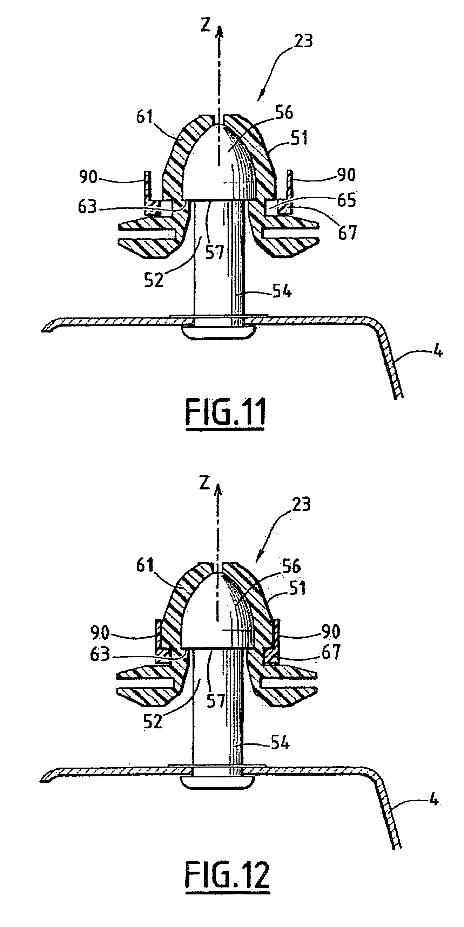

Comme illustré sur les Figures 11 et 12, la condamnation du verrouillage mutuel des deux éléments de fixation 51, 52, après enclenchement élastique, est assuré au moyen du collier 67, en engageant et en serrant ce dernier dans la gorge 65.

Pour cela, l'opérateur enfile le collier 67 dans sa position pré-montée sur le réceptacle 61, jusqu'au niveau de la gorge 65 (Figure 11), et serre le collier 67 en pressant sur les boutons de manoeuvre 90. Les oreilles 82 sont guidées selon la direction des deux languettes parallèles 81, et s'enclenchent dans les crans définis par l'extrémité libre des lances 84 et les faces 80, de sorte que le collier atteint sa configuration serrée représentée à la Figure 10.

Les deux demi-colliers 67A, 67B, serrés dans la gorge 65, sous le col 63, limitent les déformations du réceptacle 61 au niveau du col 63, et interdisent ainsi le retrait du plot ogival 56 de son logement (Figure 12).

On comprend que le collier 67 peut être serré manuellement par l'opérateur, sans recours à un outil spécifique de serrage.

## Revendications

1. Dispositif de positionnement et de fixation d'un mécanisme d'essuie-vitre sur une partie de caisse de véhicule automobile, comprenant au moins trois paires d'éléments de fixation (21, 22, 23), chacune comprenant un élément de fixation (31, 41, 51) solidaire du mécanisme d'essuie-vitre (1), et un deuxième élément de fixation (32, 42, 52) solidaire de la partie de caisse, dans lequel les première et deuxième paires (21, 22) forment des liaisons pivot coaxiales offrant au mécanisme (1) une liberté de rotation suivant un même axe (Y), et la troisième paire (23) forme une liaison à enclenchement élastique par rotation autour dudit axe (Y), **caractérisé en ce que** les première et deuxième paires (21, 22) sont conçues pour être assemblées par engagement axial du premier élément de fixation (31, 41) dans le deuxième élément de fixation (32, 42), successivement, et selon deux sens opposés.

2. Dispositif suivant la revendication 1, **caractérisé en ce que** le premier élément de fixation des deux paires formant pivot (21, 22) comprend un téton (31, 41) partiellement cylindrique, solidaire du mécanisme d'essuie-vitre (1) à une extrémité libre d'un bras (9) de ce dernier, tandis que le deuxième élément de fixation de ces deux paires (21, 22) comprend un trou (35, 45) complémentaire du téton respectif (31, 41) ménagé dans une plaquette de fixation respective (32, 42) solidaire de la partie de caisse, et conformé de façon à empêcher l'engagement ou le retrait du téton (31, 41) de façon radiale.

3. Dispositif suivant la revendication 2, **caractérisé en ce que** le téton (31) d'une première (21) des deux paires formant pivot présente un tronçon d'extrémité libre (31A) cylindrique, pouvant s'engager de façon ajustée dans le trou (35) correspondant, et un tronçon intermédiaire (31B) de moindre section, de sorte qu'un débattement angulaire du téton (31) par rapport à son axe (Y) est autorisé lorsque le tronçon intermédiaire (31B) est engagé dans le trou (35) correspondant.

4. Dispositif suivant la revendication 2 ou 3, **caractérisé en ce que** le téton (41) de la deuxième (22) des deux paires formant pivot comporte des moyens d'enclenchement élastique (41A) fonctionnant axialement, qui forment des moyens d'arrêt s'opposant au retrait dudit téton (41) du trou correspondant (45).

5. Dispositif suivant les revendications 3 et 4 prises ensemble, **caractérisé en ce que** les tétons (31, 41) sont adaptés pour que, lorsque le téton (41) de la deuxième paire (22) est dans la position de butée définie par lesdits moyens d'arrêt (41A), le téton (31) de la première paire (21) est engagé dans le trou correspondant (35) par son tronçon intermédiaire (31A).

6. Dispositif suivant l'une quelconque des revendications 1 à 5, **caractérisé en ce que** le deuxième élément de fixation (52) de la paire (23) formant liaison par enclenchement comprend un plot (56) en forme d'ogive, pourvu d'un épaulement (57), et faisant saillie de la partie de caisse vers l'extérieur.

7. Dispositif suivant la revendication 6, **caractérisé en ce que** le premier élément de fixation (51) de la paire (23) formant liaison par enclenchement comprend un réceptacle en matériau élastomère (61) solidaire du mécanisme (1), ayant un logement complémentaire du plot (56), et un col déformable (63) prévu pour coopérer avec l'épaulement (57) de façon à bloquer le plot (56) dans le logement.

8. Procédé de montage d'un mécanisme d'essuie-vitre sur une partie de caisse d'un véhicule automobile, ledit mécanisme (1) et ladite partie de caisse étant pourvus d'un dispositif de positionnement et de fixation selon l'une quelconque des revendications 1 à 7, procédé dans lequel on réalise les étapes successives suivantes :
- on assemble la première (21) des paires formant pivot ;
- on assemble la deuxième (22) des paires formant pivot ; et
- on assemble la paire (23) formant liaison par enclenchement en faisant pivoter le mécanisme (1) autour de l'axe de rotation Y défini par les pivots.

9. Procédé selon la revendication 8, le dispositif de positionnement et fixation étant de plus conforme à la revendication 5, **caractérisé en ce que** pour assembler les paires formant pivot (21, 22) :
- on engage le téton (31) de la première paire (21) dans le trou (35) correspondant, et on poursuit l'engagement axial jusqu'à ce que le tronçon (31B) de moindre section soit engagé dans le trou (35) ;
- on place le téton (41) de la deuxième paire (22) en regard du trou (45) correspondant, et on l'y engage axialement jusqu'à enclenchement des moyens d'enclenchement élastique (41A) associés, de sorte que le téton (31) de la première paire (21) coopère de façon ajustée avec le trou correspondant (35) au niveau du tronçon d'extrémité (31A).

10. Véhicule automobile comprenant une partie de caisse et un mécanisme d'essuie-vitre (1) fixé sur ladite partie de caisse, **caractérisé en ce qu**'il comprend un dispositif de positionnement et de fixation selon l'une quelconque des revendications 1 à 7, au moyen duquel ledit mécanisme d'essuie-vitre (1) est fixé sur ladite partie de caisse.

## Claims

1. Device for positioning and fixing a wiper mechanism to part of the body of a motor vehicle, comprising at least three pairs of fixing elements (21, 22, 23), each one comprising a fixing element (31, 41, 51) secured to the wiper mechanism (1), and a second fixing element (32, 42, 52) secured to the body part, in which device the first and second pairs (21, 22) form coaxial pivot connections allowing the mechanism (1) freedom to rotate about one and the same axis (Y), and the third pair (23) forms a connection with elastic interlocking by rotation about the said axis (Y), **characterized in that** the first and second pairs (21, 22) are designed to be assembled by axially engaging the first fixing element (31, 41) in the second fixing element (32, 42), in turn, and in two opposite directions.

2. Device according to Claim 1, **characterized in that** the first fixing element of the two pivot-forming pairs (21, 22) comprises a partially cylindrical stub (31, 41) secured to the wiper mechanism (1) at a free end of an arm (9) thereof, while the second fixing element of these two pairs (21, 22) comprises a hole (35, 45) that complements the respective stub (31, 41) and is formed in a respective fixing plate (32, 42) secured to the body part and shaped in such a way as to prevent the stub (31, 41) from being engaged or removed radially.

3. Device according to Claim 2, **characterized in that** the stub (31) of a first (21) of the two pivot-forming pairs has a cylindrical free end portion (31A) which can be engaged as a close fit in the corresponding hole (35), and an intermediate portion (31B) of smaller cross section, so that any angular excursion of the stub (31) relative to its axis (Y) is permitted when the intermediate portion (31B) is engaged in the corresponding hole (35).

4. Device according to Claim 2 or 3, **characterized in that** the stub (41) of the second (22) of the two pivot-forming pairs comprises elastic interlocking means (41A) operating axially, which form stop means preventing the said stub (41) from being removed from the corresponding hole (45).

5. Device according to Claims 3 and 4, considered together, **characterized in that** the stubs (31, 41) are designed so that when the stub (41) of the second pair (22) is in the position of abutment defined by the said stop means (41A), the stub (31) of the first pair (21) is engaged in the corresponding hole (35) via its intermediate portion (31A).

6. Device according to any one of Claims 1 to 5, **characterized in that** the second fixing element (52) of the pair (23) that forms the interlocking connection comprises an ogee-shaped knob (56) provided with a shoulder (57) and projecting outwards from the body part.

7. Device according to Claim 6, **characterized in that** the first fixing element (51) of the pair (23) that forms an interlocking connection comprises a receptacle made of elastomeric material (61) secured to the mechanism (1) with a housing that complements the knob (56), and a deformable neck (63) designed to collaborate with the shoulder (57) in such a way as to immobilize the knob (56) in the housing.

8. Method of mounting a wiper mechanism on a motor vehicle body part, the said mechanism (1) of the said body part being provided with a positioning and fixing device according to any one of Claims 1 to 7, in which method the following steps are performed in succession:
- the first (21) of the pivot-forming pairs is assembled;
- the second (22) of the pivot-forming pairs is assembled; and
- the pair (23) that forms the interlocking connection is assembled by pivoting the mechanism (1) about the axis of rotation (Y) defined by the pivots.

9. Method according to Claim 8, the positioning and fixing device in addition being one according to Claim 5, **characterized in that**, in order to assemble the pivot-forming pairs (21, 22):
- the stub (31) of the first pair (21) is engaged in the corresponding hole (35) and axial engagement is continued until the portion (31B) of smaller cross section is engaged in the hole (35);
- the stub (41) of the second pair (22) is positioned facing the corresponding hole (45) and engaged axially therein until the associated elastic interlocking means (41A) interlock so that the stub (31) of the first pair (21) collaborates as a close fit with the corresponding hole (35) at the end portion (31A).

10. Motor vehicle comprising a body part and a wiper mechanism (1) fixed to the said body part, **characterized in that** it comprises a positioning and fixing device according to any one of Claims 1 to 7, by means of which the said wiper mechanism (1) is fixed to the said body part.

## Patentansprüche

1. Positionier- und Befestigungsvorrichtung eines Scheibenwischermechanismus auf einem Karosserieteil eines Kraftfahrzeugs, die mindestens drei Paare Befestigungselemente (21, 22, 23) aufweist, die jeweils ein Befestigungselement (31, 41, 51) aufweisen, das fest mit dem Scheibenwischermechanismus (1) verbunden ist, und ein zweites Befestigungselement (32, 42, 52), das fest mit dem Karosserieteil verbunden ist, bei der das erste und das zweite Paar (21, 22) koaxiale Schwenkverbindungen bilden, die dem Mechanismus (1) eine Rotationsfreiheit gemäß einer gleichen Achse (Y) gestatten, und wobei das dritte Paar (23) eine Verbindung mit elastischem Einrasten durch Rotation um die Achse (Y) bildet, **dadurch gekennzeichnet, dass** das erste und das zweite Paar (21, 22) konzipiert sind, um durch axiales Einfügen des ersten Befestigungselements (31, 41) in das zweite Befestigungselement (32, 42) nacheinander und entlang entgegengesetzter Richtungen zusammengefügt zu werden.

2. Vorrichtung nach Anspruch 1, **dadurch gekennzeichnet, dass** das erste Befestigungselement der zwei Paare, die einen Schwenker (21, 22) bilden, einen teilweise zylindrischen Zapfen (31, 41) aufweist, der mit dem Scheibenwischermechanismus (1) an einem freien Ende eines Arms (9) dieses Letzteren fest verbunden ist, während das zweite Befestigungselement dieser zwei Paare (21, 22) eine Öffnung (35, 45) aufweist, die zu dem jeweiligen Zapfen (31, 41) komplementär ist, die in einer jeweiligen Befestigungsplatte (32, 42) eingerichtet ist, die mit dem Fahrzeugkarosserieteil fest verbunden und derart ausgebildet ist, dass sie das Einfügen oder das Herausnehmen des Zapfens (31, 41) radial verhindert.

3. Vorrichtung nach Anspruch 2, **dadurch gekennzeichnet, dass** der Zapfen (31) eines ersten (21) der zwei Befestigungselementpaare, die den Schwenker bilden, einen freien zylindrischen Endabschnitt (31A) aufweist, der sich knapp in die entsprechende Öffnung (35) einfügen kann, und einen Zwischenabschnitt (31B) mit kleinerem Querschnitt, derart, dass ein winkeliges Ausschlagen des Zapfens (31) in Bezug auf seine Achse (Y) gestattet ist, wenn der Zwischenabschnitt (31B) in die entsprechende Öffnung (35) eingefügt ist.

4. Vorrichtung nach Anspruch 2 oder 3, **dadurch gekennzeichnet, dass** der Zapfen (41) des zweiten (22) der zwei Paare, die den Schwenker bilden, elastische Einrastmittel (41A) aufweist, die axial funktionieren, die Stoppmittel bilden, die sich dem Herausnehmen des Zapfens (41) aus der entsprechenden Öffnung (45) widersetzen.

5. Vorrichtung nach den Ansprüchen 3 und 4 gemeinsam genommen, **dadurch gekennzeichnet, dass** die Zapfen (31, 41) derart sind, dass, wenn der Zapfen (41) des zweiten Paars (22) in der von den Stoppmitteln (41A) definierten Anschlagposition ist, der Zapfen (31) des ersten Paars (21) in die entsprechende Öffnung (35) über seinen Zwischenabschnitt (31A) eingefügt ist.

6. Vorrichtung nach einem der Ansprüche 1 bis 5, **dadurch gekennzeichnet, dass** das zweite Befestigungselement (52) des Paars (23), das die Verbindung durch Einrasten bildet, einen Klotz (56) in Spitzkegelform aufweist, der mit einem Ansatz (57) versehen ist und von dem Karosserieteil nach außen vorsteht.

7. Vorrichtung nach Anspruch 6, **dadurch gekennzeichnet, dass** das erste Befestigungselement (51) des Paars (23), das die Verbindung durch Einrasten bildet, eine Aufnahme aus Elastomermaterial (61) aufweist, die fest mit dem Mechanismus (1) verbunden ist, die eine komplementäre Aufnahme des Klotzes (56) und einen verformbaren Hals (63) hat, der vorgesehen ist, um mit dem Ansatz (57) derart zusammenzuwirken, dass der Klotz (56) in der Aufnahme blockiert ist.

8. Montageverfahren eines Scheibenwischermechanismus auf einen Karosserieteil eines Kraftfahrzeugs, wobei der Mechanismus (1) und der Karosserieteil mit einer Positionier- und Befestigungsvorrichtung nach einem der Ansprüche 1 bis 7 versehen sind, wobei bei dem Verfahren die folgenden Schritte ausgeführt werden:
- Zusammenfügen des ersten (21) den Schwenker bildenden Paars;
- Zusammenfügen des zweiten (22) den Schwenker bildenden Paars; und
- Zusammenfügen des Paars (23), das durch Einrasten eine Verbindung bildet, indem man den Mechanismus (1) um die von den Schwenkern definierte Rotationsachse (Y) schwenken lässt.

9. Verfahren nach Anspruch 8, wobei die Positionier- und Befestigungsvorrichtung ferner Anspruch 5 entspricht, **dadurch gekennzeichnet, dass** man zum Zusammenfügen der Schwenker bildenden Paare (21, 22):
- den Zapfen (31) des ersten Paars (21) in die entsprechende Öffnung (35) einfügt und dann das axiale Einfügen fortsetzt, bis der Abschnitt mit kleinerem Querschnitt (31B) in die Öffnung (35) eingesetzt ist;
- man den Zapfen (41) des zweiten Paars (22) gegenüber der entsprechenden Öffnung (45) anordnet und dort axial bis zum Einrasten der dazugehörenden elastischen Einrastmittel (41A) derart einfügt, dass der Zapfen (31) des ersten Paars (21) knapp mit der entsprechenden Öffnung (35) auf der Ebene des Endabschnitts (31A) zusammenwirkt.

10. Kraftfahrzeug mit einem Karosserieteil und einem Scheibenwischermechanismus (1), der auf dem Karosserieteil befestigt ist, **dadurch gekennzeichnet, dass** es eine Positionier- und Befestigungsvorrichtung nach einem der Ansprüche 1 bis 7 aufweist, anhand welcher der Scheibenwischermechanismus (1) an dem Karosserieteil befestigt ist.
